# FASCICULE DE BREVET EUROPEEN

(11) **EP 2 547 745 B1**
(45) Date de publication et mention de la délivrance du brevet: **14.11.2018**
(21) Numéro de dépôt: 11712909.8
(22) Date de dépôt: 15.02.2011
(51) Int. Cl.: C09K 5/04

(54) **FLUIDE FRIGORIGENE POUR LE TRANSFERT DE CHALEUR A HAUTE TEMPERATURE**
KÜHLMITTEL FÜR HOCHTEMPERATUR-WÄRMEÜBERTRAGUNG
REFRIGERANT FOR HIGH-TEMPERATURE HEAT TRANSFER

(30) Priorité: 19.03.2010 FR 1051983
(43) Date de publication de la demande: 23.01.2013
(73) Titulaire: Arkema France, 92700 Colombes (FR)
(72) Inventeur: RACHED, Wissam, F-69630 Chaponost (FR); ABBAS, Laurent, Narberth 19072 (US)
(74) Mandataire: Dang, Doris
(86) Numéro de dépôt international: PCT/FR2011/050316
(87) Numéro de publication internationale: WO 2011/114029

(56) Documents cités:
- US-A1- 2002 198 274
- US-A1- 2003 050 356
- US-A1- 2008 105 848
- US-A1- 2009 049 856
- US-B2- 6 814 884

## Description

### DOMAINE DE L'INVENTION

La présente invention concerne un fluide frigorigène adapté pour une utilisation à une température de condensation élevée, et notamment pour une utilisation dans une pompe à chaleur à haute température.

### ARRIERE-PLAN TECHNIQUE

Les fluides à base de composés fluorocarbonés sont largement utilisés dans de nombreux dispositifs industriels, notamment de climatisation, de pompe à chaleur ou de réfrigération. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Parmi les dispositifs de transfert de chaleur existants figurent notamment les pompes à chaleur à haute température (c'est-à-dire avec une température de condensation supérieure ou égale à 70°C, voire supérieure ou égale à 80°C). Ces dispositifs sont notamment utiles dans l'industrie, pour la valorisation de flux chauds.

Or les pompes à chaleur à haute température posent des problèmes de conception particuliers.

En effet, les contraintes de température et de pression dans les systèmes de ce type sont tels que peu de fluides peuvent être utilisés. Ainsi, des fluides tels que le HFC-134a, utilisés pour le transfert de chaleur dans d'autres applications, ne conviennent pas car ils présentent des températures critiques inférieures à la température de condensation, et ont donc de très mauvaises performances pour le transfert de chaleur à température élevée.

Le composé de transfert de chaleur traditionnellement utilisé pour les pompes à chaleur à haute température était le CFC-114 (dichlorofluoroéthane). Ce composé doit être remplacé en raison de son impact sur l'environnement.

Le document US 6,814,884 décrit l'utilisation de 1,1,1,3,3-pentafluorobutane (HFC-365mfc) en combinaison avec au moins un composé supplémentaire choisi parmi le 1,1,1,2-tétrafluoroéthane (HFC-134a), le pentafluoroéthane (HFC-125), le 1,1,1,3,3-pentafluoropropane (HFC-245fa) et le 1,1,1,2,3,3,3,-heptafluoropropane (HFC-227ea). Le HFC-365mfc est présent à hauteur de 40 à 95 % en masse et le composé supplémentaire à hauteur de 5 à 60 % en masse. Un exemple concret est fourni avec 75 % de HFC-365mfc et 25 % de HFC-227ea, en masse.

Par ailleurs le document US 2009/0049856 décrit l'utilisation de mélanges ternaires pour le transfert de chaleur à température élevée. Ces mélanges ternaires comprennent du 1,1,1,2-tétrafluoroéthane (HFC-134a), du 1,1,1,2,3,3-hexafluoropropane (HFC-236ea) et du 1,1,1,3,3-pentafluoropropane (HFC-245fa).

Le document US 2003/050356 décrit une composition comprenant un composant hydrofluorocarbure consistant essentiellement en du 1,1,1,3,3-pentafluorobutane et du 1,1,1,3,3-pentafluoropropane et une quantité de trans-1,2-dichloroéthylène comprise entre supérieure à 0 et d'environ 23 % en poids.

Le document US 2002/198274 décrit une composition comprenant un composant hydrofluorocarbure consistant essentiellement en du 1,1,1,3,3-pentafluorobutane et du 1,1,1,3,3-pentafluoropropane et une quantité de méthanol comprise entre environ 1 et 13 % en poids.

Le document US 2008/105848 décrit une composition comprenant du 1,1,1,3,3-pentafluorobutane, du 1,1,1,3,3-pentafluoropropane et du trans-1,2-dichloroéthylène.

Toutefois, les fluides de transfert de chaleur proposés dans l'état de la technique pour les pompes à chaleur à haute température présentent encore une efficacité insuffisante.

Il existe donc un réel besoin de trouver un fluide de transfert de chaleur permettant de réaliser un transfert de chaleur plus efficace à haute température que les fluides de transfert de chaleur de l'état de la technique (et permettant notamment de concevoir des pompes à chaleur à haute température plus efficaces que celles de l'état de la technique), tout en limitant l'impact négatif sur l'environnement.

### RESUME DE L'INVENTION

L'invention concerne en premier lieu un procédé de transfert de chaleur au moyen d'un circuit de compression de vapeur contenant un fluide de transfert de chaleur, comprenant successivement l'évaporation du fluide de transfert de chaleur, la compression du fluide de transfert de chaleur, la condensation du fluide de chaleur à une température supérieure ou égale à 70°C et la détente du fluide de transfert de chaleur, dans lequel le fluide de transfert de chaleur comprend du 1,1,1,3,3-pentafluorobutane et du 1,1,1,3,3-pentafluoropropane, la proportion massique de 1,1,1,3,3-pentafluorobutane dans le fluide de transfert de chaleur étant inférieure ou égale à 20 %, la proportion massique de 1,1,1,3,3-pentafluorobutane et de 1,1,1,3,3-pentafluoropropane étant supérieure ou égale à 97%.

Selon un mode de réalisation, la condensation du fluide de transfert de chaleur est effectuée à une température de 70 à 150°C, de préférence de 90 à 140°C.

Selon un mode de réalisation, le procédé susmentionné est un procédé de chauffage d'un fluide ou d'un corps, et le circuit de compression de vapeur forme une pompe à chaleur.

Selon un mode de réalisation, la proportion massique de 1,1,1,3,3-pentafluorobutane dans le fluide de transfert de chaleur est de 2 à 16 %, de préférence de 5 à 13 %, et de manière plus particulièrement préférée de 8 à 10 %.

L'invention concerne également un fluide de transfert de chaleur adapté à la mise en oeuvre du procédé ci-dessus, comprenant du 1,1,1,3,3-pentafluorobutane et du 1,1,1,3,3-pentafluoropropane, la proportion massique de 1,1,1,3,3-pentafluorobutane étant inférieure ou égale à 20 % et la proportion massique de 1,1,1,3,3-pentafluorobutane et de 1,1,1,3,3-pentafluoropropane étant supérieure ou égale à 97%.

Selon un mode de réalisation, la proportion massique de 1,1,1,3,3-pentafluorobutane est de 2 à 16 %, de préférence de 5 à 13 %, et de manière plus particulièrement préférée de 8 à 10 %.

L'invention concerne également une composition de transfert de chaleur comprenant le fluide de transfert de chaleur susmentionné et un ou plusieurs additifs choisis parmi les lubrifiants, les stabilisants, les tensioactifs, les agents traceurs, les agents fluorescents, les agents odorants, les agents de solubilisation et leurs mélanges.

L'invention concerne également une installation de transfert de chaleur comprenant un circuit de compression de vapeur contenant le fluide de transfert de chaleur susmentionné ou la composition de transfert de chaleur susmentionnée.

Selon un mode de réalisation, cette installation est une installation de pompe à chaleur.

La présente invention permet de surmonter les inconvénients de l'état de la technique. Elle fournit plus particulièrement un fluide de transfert de chaleur permettant de réaliser un transfert de chaleur efficace à température élevée ; grâce à ce fluide de transfert de chaleur, on peut faire fonctionner des pompes à chaleur à haute température de manière efficace, sans impact significativement négatif sur l'environnement.

### DESCRIPTION DE MODES DE REALISATION DE L'INVENTION

L'invention est maintenant décrite plus en détail et de façon non limitative dans la description qui suit.

Par « composé de transfert de chaleur », respectivement « fluide de transfert de chaleur » (ou fluide frigorigène), on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par « composition de transfert de chaleur » on entend une composition comprenant un fluide de transfert de chaleur et éventuellement un ou plusieurs additifs qui ne sont pas des composés de transfert de chaleur pour l'application envisagée.

Le procédé de transfert de chaleur selon l'invention repose sur l'utilisation d'un circuit de compression de vapeur contenant un fluide de transfert de chaleur. Le procédé de transfert de chaleur peut être un procédé de chauffage ou de refroidissement d'un fluide ou d'un corps.

Le circuit de compression de vapeur contenant un fluide de transfert de chaleur comprend au moins un évaporateur, un compresseur, un condenseur et un détendeur, ainsi que des lignes de transport de fluide de transfert de chaleur entre ces éléments.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

L'installation peut comprendre un couplage du détendeur avec une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, *via* un fluide caloporteur) est absorbée par le fluide de transfert de chaleur, lors de l'évaporation de ce dernier, et ce à une température relativement faible par rapport à l'environnement.

Dans le cas d'un procédé de chauffage, de la chaleur est cédée (directement ou indirectement, *via* un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en oeuvre le transfert de chaleur est appelée dans ce cas « pompe à chaleur ». L'invention est particulièrement utile pour de tels systèmes de pompes à chaleur.

L'invention concerne un procédé de transfert de chaleur à haute température, c'est-à-dire que pour lequel la température de condensation du fluide de transfert de chaleur est supérieure ou égale à 70°C, voire à 80°C. Généralement, la température de condensation est inférieure ou égale à 150°C. De préférence, la température de condensation est de 90 à 140°C.

Selon l'invention, le fluide de transfert de chaleur comprend au moins deux composés de transfert de chaleur, à savoir le 1,1,1,3,3-pentafluorobutane (HFC-365mfc) et le 1,1,1,3,3-pentafluoropropane (HFC-245fa).

Selon un mode de réalisation, le fluide de transfert de chaleur est de type binaire, c'est-à-dire qu'il ne contient pas d'autre composé de transfert de chaleur en plus du HFC-365mfc et du HFC-245fa (aux impuretés près). Toutefois, selon un autre mode de réalisation, le fluide de transfert de chaleur comprend un ou plusieurs composés de transfert de chaleur supplémentaires, notamment des hydrocarbures, en une proportion massique inférieure ou égale à 5 %, et de préférence inférieure ou égale à 3 %. A titre d'exemple de composé de transfert de chaleur supplémentaire, on peut citer l'isopentane, qui a pour avantage d'augmenter la miscibilité des composés.

Le fluide de transfert de chaleur selon l'invention comprend avantageusement :
- de 1 à 20 % de HFC-365mfc et de 80 à 99 % de HFC-245fa, en masse ;
- plus particulièrement de 2 à 16 % de HFC-365mfc et de 84 à 98 % de HFC-245fa, en masse ;
- plus particulièrement de 5 à 13 % de HFC-365mfc et de 87 à 95 % de HFC-245fa, en masse ; et
- plus particulièrement de 8 à 10 % de HFC-365mfc et de 90 à 92 % de HFC-245fa, en masse.

De tels mélanges binaires présentent en effet un meilleur coefficient de performance, pour l'application considérée, que les fluides de transfert de chaleur de l'état de la technique.

Il peut être particulièrement avantageux de disposer d'un fluide de transfert de chaleur non inflammable (selon la norme ASTM E681). Cela est le cas lorsque la teneur en HFC-365mfc dans le mélange binaire est inférieure ou égale à 9,4 %, et notamment lorsqu'elle est inférieure ou égale à 9 %.

Le fluide de transfert de chaleur peut être mélangé avec un ou plusieurs additifs pour fournir la composition de transfert de chaleur circulant dans le circuit de compression de vapeur. Les additifs peuvent notamment être choisis parmi les lubrifiants, les stabilisants, les tensioactifs, les agents traceurs, les agents fluorescents, les agents odorants, les agents de solubilisation et leurs mélanges.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de lubrifiants on peut notamment utiliser des huiles d'origine minérale, des huiles silicones, des paraffines, des naphtènes, des paraffines synthétiques, des alkylbenzènes, des poly-alpha oléfines, des polyalkène glycols, des polyol esters et / ou des polyvinyléthers.

A titre d'agents traceurs (susceptibles d'être détectés) on peut citer les hydrofluorocarbures, les hydrofluorocarbures deutérés, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromaiques hétérocycliques, l'ascaridol, l'o-méthoxy(méthyl)-phénol et les combinaisons de ceux-ci.

### EXEMPLES

Les exemples suivants illustrent l'invention sans la limiter.

### Exemple 1 - méthode de calcul des propriétés des fluides de transfert de chaleur

L'équation RK-Soave est utilisée pour le calcul des densités, enthalpies, entropies et les données d'équilibre liquide / vapeur des mélanges. L'utilisation de cette équation nécessite la connaissance des propriétés des corps purs utilisés dans les mélanges en question et aussi les coefficients d'interaction pour chaque binaire.

Les données nécessaires pour chaque corps pur sont la température d'ébullition, la température et la pression critique, la courbe de pression en fonction de la température à partir du point d'ébullition jusqu'au point critique, les densités liquide saturée et vapeur saturée en fonction de la température.

Les données sur le HFC-245fa sont publiées dans l'ASHRAE Handbook 2005 chapitre 20, et sont aussi disponibles sous Refrop (logiciel développé par NIST pour le calcul des propriétés des fluides frigorigènes).

Les données sur le HFC-365mfc sont disponibles sous Refprop (logiciel développé par NIST pour le calcul des propriétés des fluides frigorigènes).

L'équation RK-Soave utilise des coefficients d'interaction binaire pour représenter le comportement des produits en mélanges. Les coefficients sont calculés en fonction des données expérimentales d'équilibre liquide vapeur.

La technique utilisée pour les mesures d'équilibre liquide / vapeur est la méthode de cellule statique analytique. La cellule d'équilibre comprend un tube saphir et est équipée de deux échantillonneurs ROLSITM électromagnétiques. Elle est immergée dans un bain cryothermostat (HUBER HS40). Une agitation magnétique à entraînement par champ tournant à vitesse variable est utilisée pour accélérer l'atteinte des équilibres. L'analyse des échantillons est effectuée par chromatographie (HP5890 series II) en phase gazeuse utilisant un catharomètre (TCD).

Les mesures d'équilibre liquide / vapeur sur le binaire HFC-245fa / HFC-365mfc sont réalisées pour l'isotherme suivante : 100°C.

### Exemple 2 - condensation à 90°C

On considère un système à compression équipé d'un évaporateur, d'un condenseur, d'un compresseur, d'un échangeur interne et d'un détendeur. Le système fonctionne avec 5°C de surchauffe et un rendement isentropique de 59,3%

Dans cet exemple, le système à compression fonctionne entre une température d'évaporation du fluide frigorigène à l'évaporateur de 30°C et une température de condensation du fluide frigorigène au condenseur de 90°C.

Les performances des compositions selon l'invention sont données dans le tableau 1 ci-dessous. Les valeurs des constituants (HFC-245fa, HFC-365mfc) pour chaque composition sont données en pourcentage en poids.

Dans ce tableau :
- Temp entrée évap est la température à l'entrée de l'évaporateur ;
- Temp sortie comp est la température à la sortie du compresseur ;
- T entrée cond est la température à l'entrée du condenseur ;
- evap P est la pression à l'évaporateur ;
- cond P est la pression au condenseur ;
- Taux (p/p) est le taux de compression ;
- Glide est le glissement de température ;
- %CAPc est le rapport de la capacité volumétrique obtenue avec le fluide considéré par rapport à la capacité volumétrique de référence obtenue avec le HFC-114 ;
- %COP est le rapport du coefficient de performance obtenu avec le fluide considéré par rapport au coefficient de performance obtenu avec le HFC-114 (le coefficient de performance étant défini comme étant la puissance utile fournie par le système sur la puissance apportée ou consommée par le système).

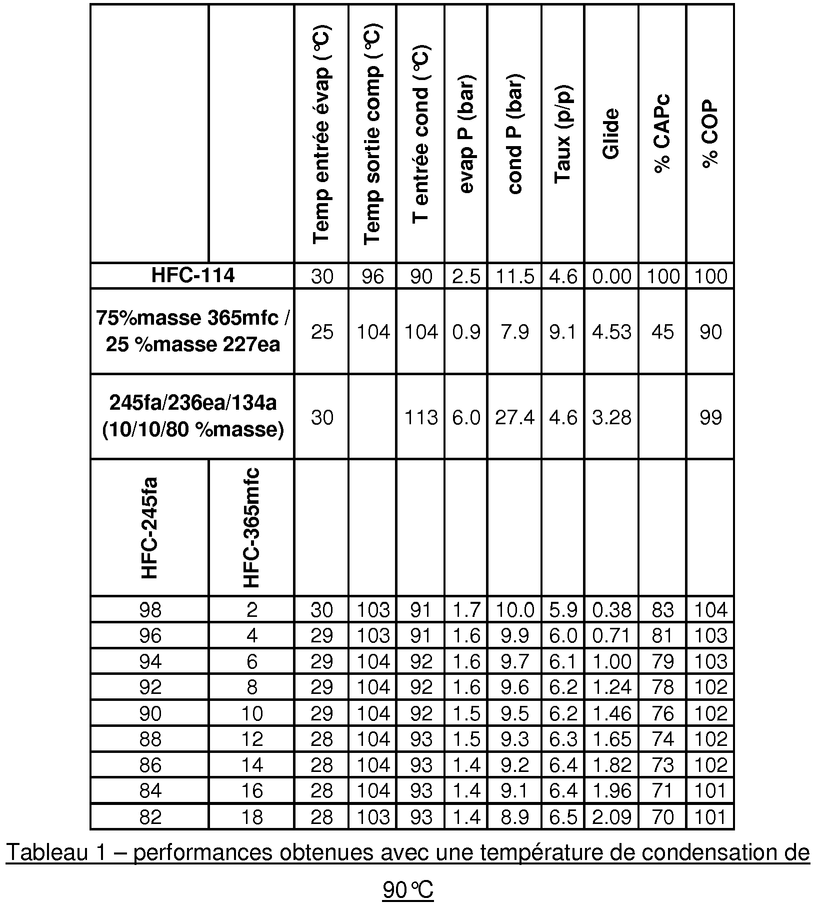

On constate que les performances obtenues avec le fluide de transfert selon l'invention sont meilleures qu'avec les fluides de transfert de chaleur de l'état de la technique, notamment le mélange binaire de 75 % de HFC-365mfc et de 25 % de HFC-227ea écrit dans le document US 6,814,884, et le mélange ternaire de 10 % de HFC-245fa, 10 % de HFC-236ea et 80 % de HFC-134a décrit dans le document US 2009/0049856.

### Exemple 3 - condensation à 140°C

Le système à compression fonctionne de la même manière que dans l'exemple 2, à ceci près que la température d'évaporation du fluide à l'évaporateur est de 80°C et que la température de condensation du fluide au condenseur est de 140°C.

Les performances des compositions selon l'invention sont données dans le tableau 2 ci-dessous. Les valeurs des constituants (HFC-245fa, HFC-365mfc) pour chaque composition sont données en pourcentage en poids. Les abréviations dans le tableau 2 ont la même signification que celles du tableau 1.

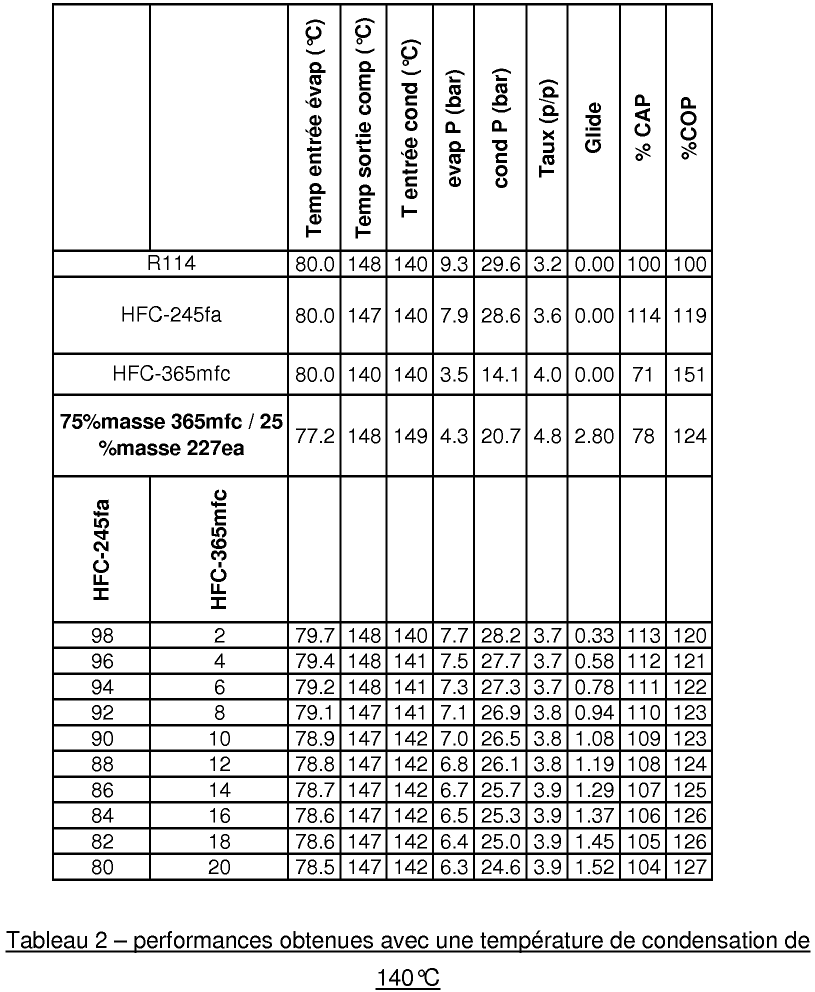

Le fluide de transfert de chaleur présente une capacité élevée (supérieure à 100) et un meilleur coefficient de performance que les fluides de l'état de la technique, notamment le mélange binaire de 75 % de HFC-365mfc et 25 % de HFC-227ea décrit dans le document US 6,814,884, et le mélange ternaire de 10 % de HFC-245fa, 10 % de HFC-236ea et 80 % de HFC-134a décrit dans le document US 2009/0049856.

## Revendications

1. Procédé de transfert de chaleur au moyen d'un circuit de compression de vapeur contenant un fluide de transfert de chaleur, comprenant successivement l'évaporation du fluide de transfert de chaleur, la compression du fluide de transfert de chaleur, la condensation du fluide de chaleur à une température supérieure ou égale à 70°C et la détente du fluide de transfert de chaleur, dans lequel le fluide de transfert de chaleur comprend du 1,1,1,3,3-pentafluorobutane et du 1,1,1,3,3-pentafluoropropane, la proportion massique de 1,1,1,3,3-pentafluorobutane dans le fluide de transfert de chaleur étant inférieure ou égale à 20 %, et la proportion massique de 1,1,1,3,3-pentafluorobutane et de 1,1,1,3,3-pentafluoropropane dans le fluide de transfert de chaleur étant supérieure ou égale à 97%.

2. Procédé selon la revendication 1, dans lequel la condensation du fluide de transfert de chaleur est effectuée à une température de 70 à 150°C, de préférence de 90 à 140°C.

3. Procédé selon la revendication 1 ou 2, qui est un procédé de chauffage d'un fluide ou d'un corps, et dans lequel le circuit de compression de vapeur forme une pompe à chaleur.

4. Procédé selon l'une des revendications 1 à 3, dans lequel la proportion massique de 1,1,1,3,3-pentafluorobutane dans le fluide de transfert de chaleur est de 2 à 16 %, de préférence de 5 à 13 %, et de manière plus particulièrement préférée de 8 à 10 %.

5. Utilisation d'une composition comprenant du 1,1,1,3,3-pentafluorobutane et du 1,1,1,3,3-pentafluoropropane, la proportion massique de 1,1,1,3,3-pentafluorobutane étant inférieure ou égale à 20 % comme fluide de transfert de chaleur, et la proportion massique de 1,1,1,3,3-pentafluorobutane et de 1,1,1,3,3-pentafluoropropane dans le fluide de transfert de chaleur étant supérieure ou égale à 97%.

6. Utilisation selon la revendication 5, **caractérisée en ce que** la proportion massique de 1,1,1,3,3-pentafluorobutane dans la composition est de 2 à 16 %, de préférence de 5 à 13 %, et de manière plus particulièrement préférée de 8 à 10 %.

7. Utilisation selon l'une des revendications 5 ou 6, **caractérisée en ce que** la composition comprend en outre un ou plusieurs additifs choisis parmi les lubrifiants, les stabilisants, les tensioactifs, les agents traceurs, les agents fluorescents, les agents odorants, les agents de solubilisation et leurs mélanges.

## Patentansprüche

1. Verfahren zur Übertragung von Wärme mittels eines Dampfdruckkreislaufs, der ein Wärmeübertragungsfluid enthält, umfassend aufeinander folgend das Verdampfen des Wärmeübertragungsfluids, die Kompression des Wärmeübertragungsfluids, die Kondensation des Wärmefluids bei einer Temperatur größer oder gleich 70°C und die Entspannung des Wärmeübertragungsfluids, wobei das Wärmeübertragungsfluid 1,1,1,3,3-Pentafluorbutan und 1,1,1,3,3-Pentafluorpropan umfasst, wobei der Massenanteil von 1,1,1,3,3-Pentafluorbutan im Wärmeübertragungsfluid kleiner oder gleich 20 % ist, und der Massenanteil von 1,1,1,3,3-Pentafluorbutan und 1,1,1,3,3-Pentafluorpropan in dem Wärmeübertragungsfluid größer oder gleich 97 % ist.

2. Verfahren nach Anspruch 1,
wobei die Kondensation des Wärmeübertragungsfluids bei einer Temperatur von 70 bis 150°C, vorzugsweise von 90 bis 140°C, vorgenommen wird.

3. Verfahren nach Anspruch 1 oder 2,
welches ein Verfahren zum Erhitzen eines Fluids oder eines Körpers ist, und wobei der Dampfdruckkreislauf eine Wärmepumpe bildet.

4. Verfahren nach einem der Ansprüche 1 bis 3,
wobei der Massenanteil von 1,1,1,3,3-Pentafluorbutan in dem Wärmeübertragungsfluid von 2 bis 16 %, vorzugsweise von 5 bis 13 %, und bevorzugter von 8 bis 10 %, beträgt.

5. Verwendung einer Zusammensetzung, umfassend 1,1,1,3,3-Pentafluorbutan und 1,1,1,3,3-Pentafluorpropan, wobei der Massenanteil von 1,1,1,3,3-Pentafluorbutan kleiner oder gleich 20 % ist, als Wärmeübertragungsfluid, und wobei der Massenanteil von 1,1,1,3,3-Pentafluorbutan und 1,1,1,3,3-Pentafluorpropan in dem Wärmeübertragungsfluid größer oder gleich 97 % ist.

6. Verwendung nach Anspruch 5,
**dadurch gekennzeichnet, dass** der Massenanteil von 1,1,1,3,3-Pentafluorbutan in der Zusammensetzung von 2 bis 16 %, vorzugsweise von 5 bis 13 %, und bevorzugter von 8 bis 10 %, beträgt.

7. Verwendung nach einem der Ansprüche 5 oder 6,
**dadurch gekennzeichnet, dass** die Zusammensetzung außerdem ein oder mehrere Additive umfasst, die ausgewählt sind aus Schmiermitteln, Stabilisatoren, grenzflächenaktiven Stoffen, Tracer-Mitteln, Fluoreszenzmitteln, Duftstoffen, Solubilisierungsmitteln und ihren Mischungen.

## Claims

1. Process for heat transfer using a vapor compression circuit containing a heat-transfer fluid, successively comprising the evaporation of the heat-transfer fluid, the compression of the heat-transfer fluid, the condensation of the heat fluid at a temperature greater than or equal to 70°C and the reduction in pressure of the heat-transfer fluid, in which the heat-transfer fluid comprises 1,1,1,3,3-pentafluorobutane and 1,1,1,3,3-pentafluoropropane, the proportion by weight of 1,1,1,3,3-pentafluorobutane in the heat-transfer fluid being less than or equal to 20% and the proportion by weight of 1,1,1,3,3-pentafluorobutane and 1,1,1,3,3-pentafluoropropane in the heat-transfer fluid being greater than or equal to 97%.

2. Process according to Claim 1, in which the condensation of the heat-transfer fluid is carried out at a temperature of 70 to 150°C, preferably of 90 to 140°C.

3. Process according to Claim 1 or 2, which is a process for heating a fluid or a body, and in which the vapor compression circuit forms a heat pump.

4. Process according to one of Claims 1 to 3, in which the proportion by weight of 1,1,1,3,3-pentafluorobutane in the heat-transfer fluid is from 2 to 16%, preferably from 5 to 13% and more particularly preferably from 8 to 10%.

5. Use of a composition comprising 1,1,1,3,3-pentafluorobutane and 1,1,1,3,3-pentafluoropropane, the proportion by weight of 1,1,1,3,3-pentafluorobutane being less than or equal to 20%, as heat-transfer fluid, and the proportion by weight of 1,1,1,3,3-pentafluorobutane and 1,1,1,3,3-pentafluoropropane in the heat-transfer fluid being greater than or equal to 97%.

6. Use according to Claim 6, **characterized in that** the proportion by weight of 1,1,1,3,3-pentafluorobutane in the composition is from 2 to 16%, preferably from 5 to 13% and more particularly preferably from 8 to 10%.

7. Use according to either of Claims 5 and 6, **characterized in that** the composition additionally comprises one or more additives chosen from lubricants, stabilizing agents, surfactants, tracing agents, fluorescent agents, odorous agents, solubilizing agents and their mixtures.
